Europäisches Patentamt

European Patent Office

Office européen des brevets

(19)

(11) **EP 1 291 763 A1**

## (12) DEMANDE DE BREVET EUROPEEN

(43) Date de publication:
**12.03.2003 Bulletin 2003/11**

(51) Int Cl.⁷: **G06F 7/38**, G06F 7/72

(21) Numéro de dépôt: 02354134.5

(22) Date de dépôt: **04.09.2002**

(84) Etats contractants désignés:
**AT BE BG CH CY CZ DE DK EE ES FI FR GB GR
IE IT LI LU MC NL PT SE SK TR**
Etats d'extension désignés:
**AL LT LV MK RO SI**

(30) Priorité: **06.09.2001 FR 0111559**

(71) Demandeur: **STMicroelectronics S.A.
92120 Montrouge (FR)**

(72) Inventeurs:
• **Liardet, Pierre-Yvan
13790 Peynier (FR)**
• **Romain, Fabrice
13090 Aix En Provence (FR)**

(74) Mandataire: **de Beaumont, Michel
Cabinet Michel de Beaumont
1, rue Champollion
38000 Grenoble (FR)**

(54) **Procédé de brouillage d'un calcul à quantité secrète**

(57) L'invention concerne un procédé de brouillage d'un calcul mettant en oeuvre au moins une opération dont au moins un résultat intermédiaire tient compte d'au moins une quantité secrète (d), consistant à modifier ledit résultat intermédiaire avec une quantité aléatoire (r), à poursuivre le calcul avec le résultat modifié, et à rétablir un résultat attendu (B) à l'issue du calcul.

Fig 4

EP 1 291 763 A1

**Description**

La présente invention concerne la protection d'une quantité secrète (mot binaire) utilisée dans un processus d'authentification ou d'identification d'un dispositif électronique (par exemple, une carte à puce, une carte électronique comprenant un ou plusieurs circuits intégrés) ou analogue, contre des tentatives de piratage. L'invention concerne plus particulièrement le brouillage de calculs prenant en compte une telle quantité secrète (dite aussi clé ou donnée secrète ou privée) . Par brouillage, on entend une modification des caractéristiques physiques observables (consommation, rayonnement thermique, électromagnétique, etc.) induite par le fonctionnement d'un composant.

Un exemple d'application de la présente invention concerne un processus de contre-mesure contre une attaque par analyse statistique de la consommation (Differential Power Analysis, DPA) d'un circuit de traitement numérique exploitant une donnée privée ou secrète. Une telle attaque par analyse de la consommation consiste à évaluer la dépendance statistique entre la consommation du circuit et l'utilisation de données numériques traitées par une puce et faisant intervenir une quantité secrète. En effet, dans un traitement algorithmique au moyen d'un circuit de traitement, il existe une dépendance entre la consommation du circuit et la donnée traitée. Le pirate utilise la ou les données introduites dans le circuit et/ou fournies par celui-ci, qui constituent donc des données "visibles" d'un algorithme faisant intervenir une quantité secrète. Ces données sont liées à l'algorithme soit en étant utilisées comme opérandes directs ou indirects par celui-ci, soit en constituant un résultat de calcul. Le pirate est alors en mesure de déterminer la donnée secrète enfouie dans le circuit en traitant l'information que lui fournit la consommation lors de l'exécution de l'algorithme et en la corrélant aux données visibles.

Afin de rendre plus difficiles les attaques par analyse statistique de consommation, une première solution connue consiste à rendre de plus en plus complexes les calculs effectués par le circuit. Cette solution est rapidement limitée par la puissance de calcul supplémentaire requise pour l'exécution de l'algorithme et le temps de calcul.

Une deuxième solution connue consiste à utiliser une valeur aléatoire pour convertir la donnée introduite en une donnée brouillée participant au calcul.

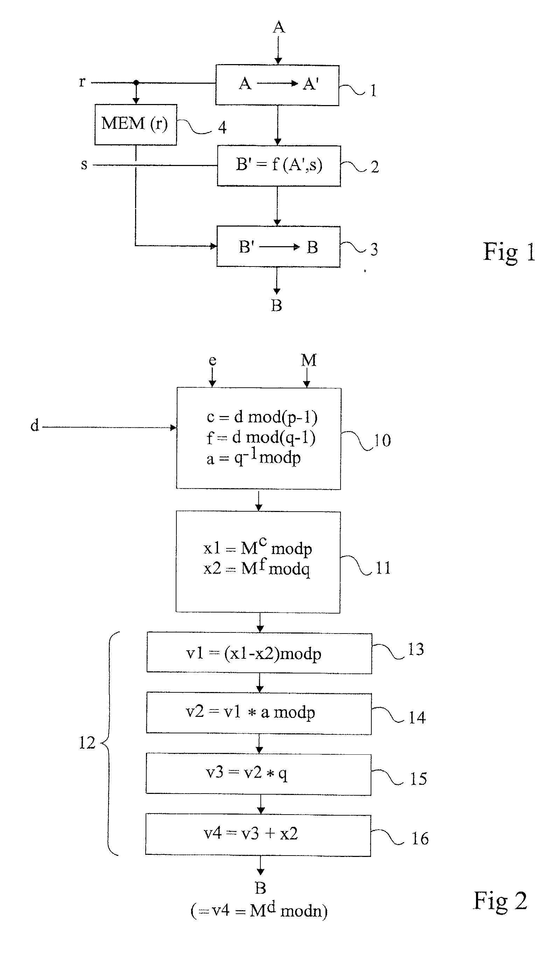

La figure 1 représente, sous forme d'organigramme très schématique, un exemple classique de procédé de traitement d'une donnée A par un algorithme mettant en oeuvre une donnée secrète s dans une fonction opératoire f. Lors de son introduction, la donnée A est convertie en une donnée A' (bloc 1) en utilisant une quantité aléatoire r. Cette conversion consiste, par exemple, à appliquer une opération arithmétique aux opérandes A et r. La donnée A' subit ensuite le calcul de la fonction proprement dite f de l'algorithme (bloc 2). Ce calcul consiste à effectuer une opération B' = f(A', s), où s constitue la donnée secrète. Le plus souvent, la fonction f est une fonction modulaire dont la taille (nombre de bits) du modulo est généralement prédéterminée par le nombre de bits pour lequel est prévu le circuit de traitement. La donnée secrète s est généralement contenue dans la puce (par exemple, enregistrée à demeure), et est fournie à l'algorithme lors de l'opération de calcul (bloc 2). C'est cette donnée secrète que cherche à trouver le pirate par l'analyse statistique de la consommation.

Une fois le résultat B' obtenu par la mise en oeuvre de l'algorithme de calcul, ce résultat est converti de façon inverse (bloc 3), pour restituer une donnée B en sortie du circuit. La quantité aléatoire r est nécessairement mémorisée (bloc 4, MEM(r)) entre les étapes 1 et 3, afin d'être réutilisée lors de la conversion inverse appliquée au résultat de l'algorithme. Bien que temporaire, la mémorisation de la quantité r doit être maintenue pendant toute l'exécution de l'algorithme (depuis l'introduction de la donnée visible jusqu'à la fourniture du résultat visible).

Sans le brouillage de la donnée A en donnée A', le piratage éventuel est facilité dans la mesure où le pirate exploite la connaissance soit de la donnée A introduite, soit de la donnée B de sortie. Le risque vient du fait que le pirate a accès (connaît directement ou indirectement) à des données qui vont être combinées avec une quantité secrète.

Un inconvénient d'un procédé de brouillage classique tel qu'illustré par la figure 1 est qu'il requiert une puissance de calcul supplémentaire non négligeable par rapport à la simple exécution de l'algorithme. Le plus souvent, la conversion de A en A', puis de A' en B, requiert autant de ressources (mémoire, temps de calcul, etc.) que le calcul-même de la fonction f de chiffrement/ déchiffrement de la quantité secrète, ou bien entraîne que l'algorithme de chiffrement/déchiffrement doit être modifié et ses performances en sont largement dégradées.

Un algorithme de chiffrement/déchiffrement asymétrique d'une quantité secrète dénommé "RSA" met en oeuvre une exponentiation modulaire. Il s'agit d'un algorithme connu mettant en oeuvre à la fois une clé privée et une clé publique. Un tel algorithme est décrit, par exemple, dans l'ouvrage "Handbook of applied cryptography" de Alfred J. Menezes, Paul C. van Oorschot et Scott A. Vanstone, publié par CRC Press en 1997, pages 285-286.

La figure 2 illustre, sous la forme d'un organigramme très schématique, un exemple de mise en oeuvre d'un algorithme d'exponentiation modulaire appliquant le théorème dit des restes chinois (CRT), connu sous le nom algorithme de Garner ou "RSA-CRT" et décrit, par exemple, dans l'ouvrage cité ci-dessus, page 612.

La première étape 10 consiste à effectuer des calculs préparatoires à partir de données visibles introduites et d'une donnée ou quantité secrète notée ici d. Les données visibles introduites dans le bloc 10 sont une donnée M à traiter et une quantité dite publique e. Le bloc 10 correspond à une phase dite d'attribution de clés et d'exposants modulaires qui seront utilisés par la suite dans l'algorithme proprement dit. On calcule des valeurs $c = d \bmod(p-1)$, $f = d \bmod(q-1)$, $a = q^{-1} \bmod p$, où p et q sont deux nombres premiers connus du dépositaire de la quantité privée ou secrète d. Le produit des nombre p et q correspond au modulo n ($n = p*q$) de la donnée résultante fournie par l'algorithme. La quantité est généralement calculée une fois pour toutes et stockée. La relation liant les modulos p et q aux données privée et secrète est :

$$E = e*d = 1 \bmod[(p-1)*(q-1)].$$

La première étape (bloc 11) de l'algorithme proprement dit consiste à calculer des exponentiations modulaires de modulo p ($x1 = M^c \bmod p$) et de modulo q ($x2 = M^f \bmod q$).
La suite de l'algorithme (bloc 12) consiste à calculer, à partir des valeurs obtenues dans les blocs 10 et 11, une donnée de sortie B telle que :

$$B = M^d \bmod n.$$

Ce calcul se décompose en quatre opérations illustrées par les blocs 13 à 16 qui effectuent successivement les opérations suivantes :

$$v1 = (x1 - x2) \bmod p ;$$

$$v2 = v1*a \bmod p ;$$

$$v3 = v2*q ;$$

et

$$v4 = v3 + x2.$$

La dernière étape 16 fournit le résultat $B = v4$.
Lors d'une attaque par analyse statistique de la consommation, on surveille généralement l'exécution de la dernière étape 16 dans laquelle la valeur q permet, une fois découverte, de remonter jusqu'à la donnée secrète d. En effet, dès que l'on connaît la factorisation ($p*q$) du modulo n qui est quant à lui connu, il suffit de résoudre l'équation E ci-dessus pour déduire la quantité secrète d.

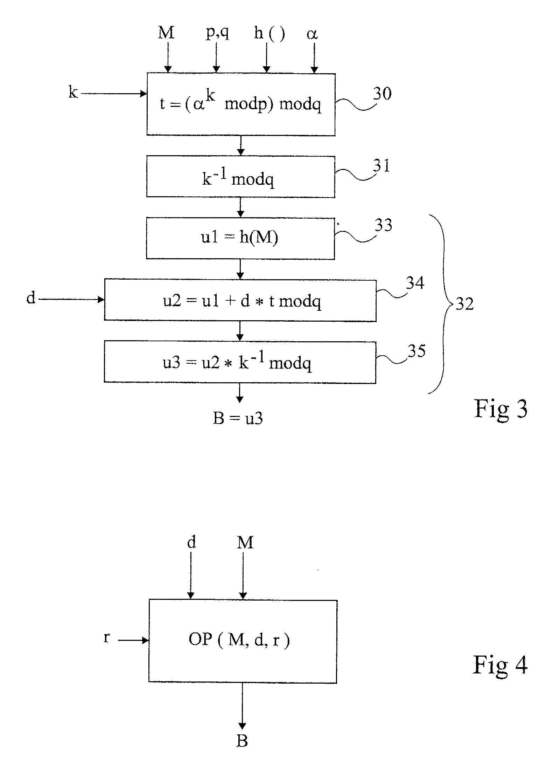

La figure 3 représente de façon très schématique et sous forme de blocs, les étapes essentielles d'un algorithme de signature asymétrique d'un message, connu sous le nom "DSA".
En entrée, cet algorithme reçoit une donnée ou un message à signer M, deux valeurs p et q représentant des nombres premiers, une fonction dite de "condensat" (hachage) h() et un générateur $\alpha$ du groupe cyclique des entiers modulo p.
Dans une première phase de l'algorithme DSA, on effectue un tirage d'un nombre aléatoire entier k, compris entre 0 et q, et on calcule (bloc 30) un premier résultat :

$$t = (\alpha^k \bmod p) \bmod q.$$

On calcule ensuite (bloc 31) l'inverse du nombre aléatoire k, modulo q : $k^{-1} \bmod q$.
Les étapes qui précèdent constituent une première phase de l'algorithme.
A la suite de cette première phase, on calcule une autre grandeur B faisant intervenir une donnée secrète d. Cette deuxième phase 32 comprend essentiellement trois étapes. Dans une première étape 33, on applique la fonction dite de "condensat" à la donnée M d'entrée ($u1 = h(M)$). Dans une deuxième étape 34, on calcule une grandeur intermédiaire u2 prenant en compte la donnée secrète d selon la formule :

$$u2 = u1 + d*t \bmod q.$$

Dans une troisième et dernière étape 35, on calcule une grandeur u3 d'après la relation suivante :

$$u3 = u2*k^{-1} \bmod q.$$

La grandeur u3 correspond au résultat B recherché. La signature est alors le couple (t, B). Dans un algorithme de type DSA, les deux composants t et B de la signature ainsi que le message M constituent des données visibles.

Le document WO-A-01/48706 décrit un procédé de brouillage d'un calcul mettant en oeuvre une quantité secrète appliqué à un algorithme de type RSA, dans lequel une quantité aléatoire est introduite au début du calcul dans le modulo. Le résultat attendu est récupéré en fin de calcul par une réduction modulaire.

Le document WO-A-98/52319 décrit un procédé dans lequel une quantité aléatoire est introduite en amont d'un algorithme de type RSA-CRT, au début d'un processus opératoire.

La présente invention vise à proposer une nouvelle solution pour brouiller un calcul mettant en jeu une quantité secrète qui nécessite moins de ressources que les solutions classiques.

L'invention vise également à proposer une solution qui minimise la durée de mémorisation d'une quantité aléatoire utilisée pour le brouillage, voire supprime la mémorisation de la quantité aléatoire.

L'invention vise en outre à proposer une solution particulièrement destinée au brouillage d'algorithmes de type RSA-CRT ou DSA contre une attaque par analyse statistique de la consommation.

Pour atteindre ces objets et d'autres, la présente invention prévoit un procédé de brouillage d'un calcul mettant en oeuvre au moins une opération dont au moins un résultat intermédiaire tient compte d'au moins une quantité secrète, et comprenant les étapes suivantes :

modifier ledit résultat intermédiaire avec une quantité aléatoire ;
poursuivre le calcul avec le résultat modifié ; et
rétablir un résultat attendu à l'issue du calcul.

Selon un mode de mise en oeuvre de la présente invention, le résultat intermédiaire correspond au résultat d'une opération simultanée ou postérieure à l'opération au cours de laquelle est prise en compte la donnée secrète.

Selon un mode de mise en oeuvre de la présente invention, la quantité aléatoire n'est pas mémorisée.

Selon un mode de mise en oeuvre de la présente invention, ledit résultat intermédiaire est de la forme :

$$v1*a \bmod p,$$

où p représente un nombre premier, où a représente le résultat d'une opération antérieure faisant intervenir le nombre p, et où v1 représente un nombre fonction de la quantité secrète.

Selon un mode de mise en oeuvre de la présente invention, on ajoute audit résultat intermédiaire un nombre proportionnel à ladite quantité aléatoire.

Selon un mode de mise en oeuvre de la présente invention, le facteur du nombre proportionnel à la quantité aléatoire est le modulo du résultat attendu, le rétablissement du résultat attendu s'effectuant par une réduction modulaire sur la base dudit modulo.

Selon un mode de mise en oeuvre de la présente invention, le facteur est unitaire, et le rétablissement du résultat attendu s'effectue en retranchant le produit de la quantité aléatoire par le quotient, par le nombre p, du modulo du résultat attendu.

Selon un mode de mise en oeuvre de la présente invention, ledit résultat intermédiaire est de la forme :

$$u1 + d*t \bmod q,$$

où q représente un nombre premier, où t représente le résultat d'une première opération antérieure faisant intervenir le nombre q, où u1 représente le résultat d'une deuxième opération antérieure fonction d'une donnée d'entrée, et où d représente la quantité secrète.

Selon un mode de mise en oeuvre de la présente invention, on multiplie le nombre q par la quantité aléatoire.

Selon un mode de mise en oeuvre de la présente invention, on ajoute la quantité aléatoire au résultat u1.

Selon un mode de mise en oeuvre de la présente invention, on ajoute la quantité aléatoire au résultat t.

Ces objets, caractéristiques et avantages, ainsi que d'autres de la présente invention seront exposés en détail dans la description suivante de modes de mise en oeuvre et de réalisation particuliers faite à titre non-limitatif en relation avec les figures jointes parmi lesquelles :

la figure 1 décrite précédemment représente, de façon très schématique et sous forme de blocs, un exemple classique de procédé de brouillage d'un calcul mettant en oeuvre une quantité secrète ;

la figure 2 décrite précédemment illustre, de façon très schématique et sous forme de blocs, un algorithme classique de type RSA-CRT ;

la figure 3 décrite précédemment illustre, de façon très schématique et sous forme de blocs, un algorithme classique de type DSA ;

la figure 4 illustre, de façon très schématique, le principe généralisé du procédé de brouillage selon l'invention ;

la figure 5 illustre, par un schéma-blocs partiel, un premier mode de mise en oeuvre du procédé de brouillage selon l'invention, appliqué à un algorithme de type RSA-CRT tel qu'illustré par la figure 2 ;

la figure 6 illustre, par un schéma-blocs partiel, un deuxième mode de mise en oeuvre du procédé de brouillage selon l'invention, appliqué à l'algorithme RSA-CRT de la figure 2 ;

la figure 7 illustre, par un schéma-blocs partiel, un troisième mode de mise en oeuvre du procédé de brouillage selon l'invention, appliqué à l'algorithme RSA-CRT de la figure 2 ;

la figure 8 illustre, sous forme de blocs, le premier mode de mise en oeuvre de l'invention, appliqué à l'algorithme DSA de la figure 3 ;

la figure 9 illustre, sous forme de blocs, le deuxième mode de mise en oeuvre de l'invention, appliqué à l'algorithme DSA de la figure 3 ; et

la figure 10 illustre, sous forme de blocs, le troisième mode de mise en oeuvre de l'invention, appliqué à l'algorithme DSA de la figure 3.

Pour des raisons de clarté, seules les étapes de procédé et d'algorithme qui sont nécessaires à la compréhension de l'invention ont été représentées aux figures et seront décrites par la suite. En particulier, les étapes concernant les échanges de quantités publiques, d'opérandes et de résultats n'ont pas été détaillées et ne font pas l'objet de la présente invention. De plus, les moyens de calcul utilisés, qu'ils soient matériels ou logiciels, ainsi que les moyens de mémorisation et de génération de quantité aléatoire sont classiques.

La figure 4 illustre de façon très schématique et généralisée, le procédé de brouillage selon l'invention. Celui-ci s'applique de façon générale à tout algorithme comportant une opération OP faisant intervenir directement une quantité secrète d avec une quantité connue M. Selon l'invention, on fait intervenir dans l'algorithme une quantité aléatoire r et on rétablit le résultat attendu B à l'issue du calcul. Une caractéristique de l'invention est que la quantité aléatoire intervient au plus tôt dans l'opération où est prise en compte la quantité secrète. De préférence, la quantité aléatoire intervient sur un résultat intermédiaire postérieur à la dernière opération prenant en compte la donnée secrète. On rend ainsi plus difficiles les tentatives de piratage en brouillant le calcul sur des quantités non visibles, et en minimisant la durée de mémorisation éventuelle de la quantité aléatoire.

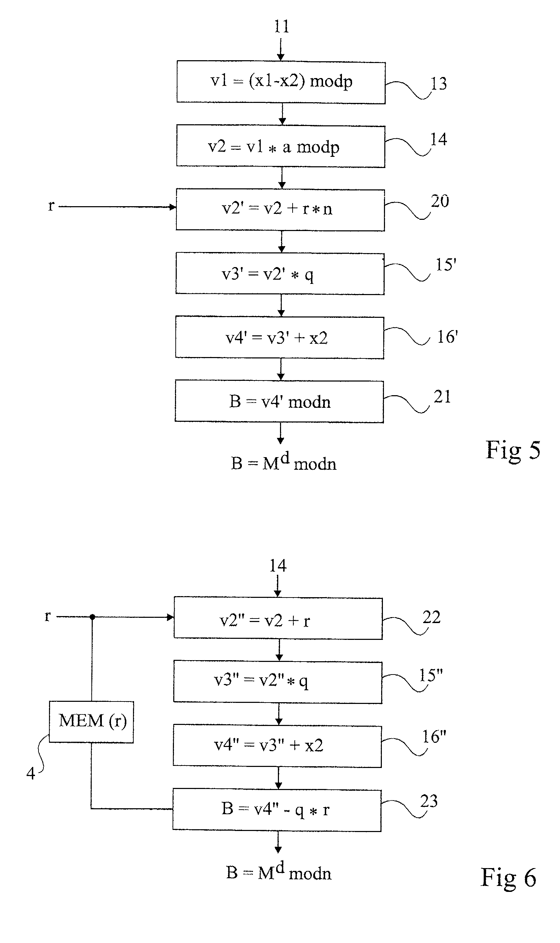

La figure 5 représente, sous forme de blocs, un mode de mise en oeuvre du procédé de brouillage de l'invention appliqué à un algorithme de type RSA-CRT tel qu'illustré par la figure 2. En figure 5, on n'a représenté que les étapes faisant partie de l'algorithme proprement dit, c'est-à-dire correspondant aux étapes 13 à 16 de la figure 2. Les étapes 13 et 14, de même que les étapes précédentes (non représentées), ne sont pas modifiées par la mise en oeuvre de l'invention.

La première étape (bloc 20) de ce mode de mise en oeuvre consiste à brouiller la valeur v2 issue de l'étape 14 au moyen d'une quantité aléatoire r. Cette étape effectue l'opération suivante :

$$v2' = v2 + r*n,$$

où n représente le modulo connu du résultat attendu.

Les étapes suivantes de l'algorithme RSA-CRT sont ensuite mises en oeuvre sans modification autre que de les appliquer à la valeur v2' et non à la valeur v2. En figure 5, ces étapes sont illustrées par des blocs 15' et 16', l'étape 15' fournissant un résultat v3' tandis que l'étape 16' fournit un résultat v4'.

Selon l'invention, le résultat v4' fait l'objet d'une réduction modulaire modulo n (bloc 21, v4' mod n) pour obtenir le résultat B.

Ce résultat respecte bien la formule $M^d$ mod n classique de l'algorithme RSA-CRT. En effet, la quantité v4' peut s'écrire :

$$v4' = [(v1*a \bmod p + r*n)*q + x2] \bmod n.$$

Cela revient à écrire :

$$v4' = [v2*q + r*n*q + x2] \bmod n,$$

soit :

$$v4' = (B + r*n*q) \bmod n.$$

Or, $r*n*q \bmod n = 0$ et B est déjà une valeur modulo n. Par conséquent, $v4' = B$.

La figure 6 représente un deuxième mode de mise en oeuvre du procédé de brouillage de l'invention, appliqué à un algorithme de type RSA-CRT.

Comme dans le premier mode de mise en oeuvre, l'invention consiste à brouiller une donnée de calcul intermédiaire et les étapes classiques ne sont pas modifiées jusqu'à l'étape 14 incluse.

Selon le deuxième mode de mise en oeuvre de la figure 6, on transforme la quantité v2 en une quantité $v2'' = v2 + r$ (bloc 22), où r représente une quantité aléatoire.

Par la suite, les étapes de l'algorithme RSA-CRT ne sont pas modifiées. L'étape 15" est appliquée à la donnée v2" et fournit le résultat v3", tandis que l'étape 16" est appliquée à la donnée v3" et fournit un résultat v4".

Selon ce mode de mise en oeuvre de l'invention, le résultat B est obtenu en soustrayant au résultat v4" la quantité q*r (bloc 23). Selon ce mode de mise en oeuvre, la quantité aléatoire r est mémorisée (bloc 4, MEM (r)) entre les étapes 22 et 23.

Le résultat B peut s'écrire :

$$B = v2''*q + x2 - q*r,$$

soit :

$$B = (v1*a \bmod p + r)*q + x2 - q*r.$$

L'expression ci-dessus peut encore s'écrire :

$$B = v2*q + r*q + x2 - q*r,$$

ou :

$$B = v3 + x2,$$

ce qui correspond bien à :

$$B = M^d \bmod n \text{ (voir figure 2).}$$

La valeur aléatoire r, pour le deuxième mode de mise en oeuvre de la figure 6, est de la même taille que p. Dans le cas contraire, l'étape 22 est effectuée modulo p, c'est-à-dire que $v2'' = (v2 + r) \bmod p$.

Par rapport au mode de mise en oeuvre de la figure 5, celui de la figure 6 requiert de mémoriser temporairement la quantité aléatoire. Toutefois, cette mémorisation n'a pas besoin d'être maintenue depuis l'introduction de la donnée visible d'entrée jusqu'à la fin de l'algorithme. Elle est donc présente dans le registre ou analogue servant d'élément de mémorisation pendant une durée inférieure à celle du procédé de brouillage classique (figure 1).

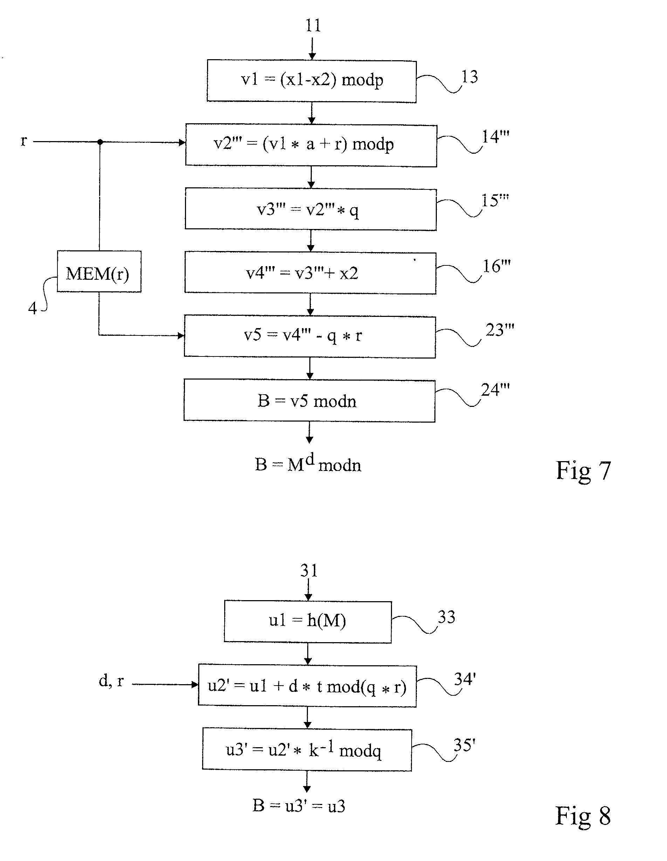

La figure 7 représente un troisième mode de mise en oeuvre du procédé de brouillage de l'invention, appliqué à un algorithme de type RSA-CRT.

Comme dans les autres modes de mise en oeuvre, l'invention consiste à brouiller une donnée de calcul intermédiaire. Les étapes classiques ne sont pas modifiées jusqu'à l'étape 13 incluse.

Selon le troisième mode de mise en oeuvre de la figure 7, l'étape 14 devient une étape 14''' dans laquelle on fait intervenir une quantité aléatoire selon la relation suivante :

$$v2''' = (v1*a + r) \bmod p.$$

Comme dans le deuxième mode de mise en oeuvre, la valeur aléatoire r est de la même taille que p.

L'étape 15''' est appliquée à la donnée v2''' et fournit le résultat v3''', tandis que l'étape 16''' est appliquée à la donnée v3''' et fournit un résultat v4'''.

Selon ce mode de mise en oeuvre de l'invention, on reprend une étape 23''' similaire à l'étape 23 de la figure 6, c'est-à-dire que l'on soustrait au résultat v4''' la quantité q*r. La quantité aléatoire r est donc mémorisée (bloc 4, MEM (r)) entre les étapes 14''' et 23'''. Enfin, on applique une étape 24 similaire à l'étape 21 (réduction modulaire modulo n) de la figure 5, mais au résultat v5. On obtient alors B.

En effet, la quantité v2''' peut s'écrire :

$$v2''' = (v1*a \bmod p + r) \bmod p,$$

soit :

$$v2'' ' = (v2 + r) \bmod p.$$

Or, par définition du modulo, la relation ci-dessus signifie qu'il existe une valeur w telle que :

$$v2''' + w*p = v2 + r,$$

ce qui peut s'écrire :

$$v2''' = v2 + r - w*p.$$

En reportant cette valeur de v2''' dans l'équation de v3''', puis dans celles de v4''' et v5, on obtient :

$$v5 = v2*q + r*q - w*p*q + x2 - q*r,$$

soit :

$$v5 = v3 + x2 - w*n.$$

La réduction modulaire de l'étape 24 conduit à :

$$B = v4, car : - w*n \bmod n = 0.$$

Les figures 8 à 10 illustrent trois modes de mise en oeuvre du procédé de brouillage selon l'invention appliquée à un algorithme de type DSA. Ces figures ne représentent que les étapes de la deuxième phase de l'algorithme DSA, la première phase n'étant pas modifiée par la mise en oeuvre de l'invention.

Selon le premier mode de mise en oeuvre illustré par la figure 8, l'étape 33 n'est pas modifiée. La mise en oeuvre de l'invention consiste à appliquer (bloc 34') à la quantité d*t de l'étape suivante, un modulo q*r, où r représente une quantité aléatoire : u2' = u1 + d*t mod(q*r).

L'étape suivante (bloc 35') reprend le calcul classique, mais appliqué à la quantité u2', u3' = u2'*k-1 mod q. Cette étape 35' fournit le résultat B qui correspond au même résultat u3 que celui obtenu dans un procédé classique.

En effet, u3' peut s'écrire :

$$u3' = u2'*k^{-1} \bmod q,$$

soit :

$$u3' = [u1 + d*t \bmod (q*r)]*k^{-1} \bmod q.$$

Or, quelle que soit la valeur y :

$$[y \bmod(q*r)] \bmod q = y \bmod q.$$

Par conséquent :

$$u3' = u2*k^{-1} \bmod q.$$

Dans le mode de mise en oeuvre de la figure 8, on reprend la même caractéristique que dans le mode de mise en oeuvre de la figure 5, à savoir qu'il n'est pas nécessaire de mémoriser la quantité aléatoire r.

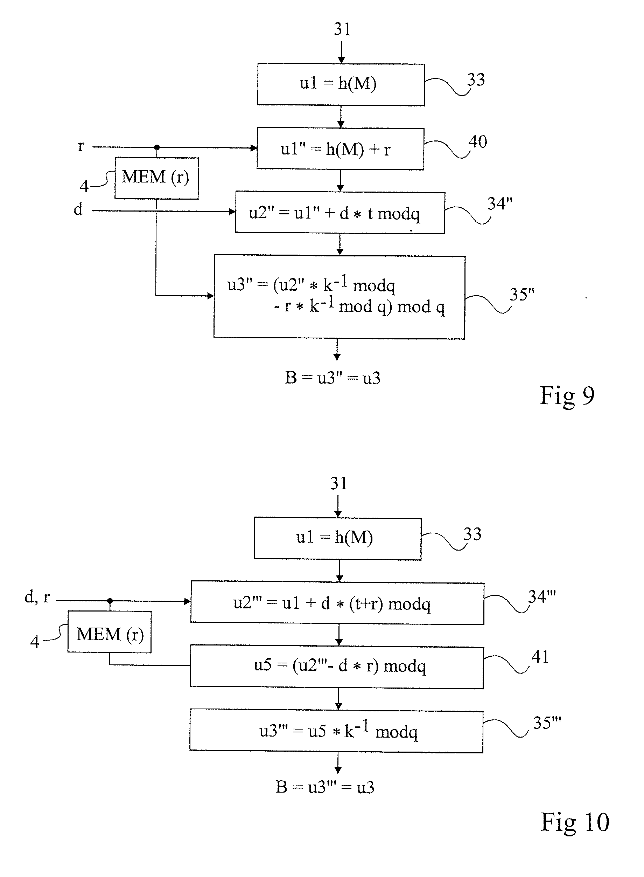

Selon le deuxième mode de mise en oeuvre illustré par la figure 9, l'étape 33 d'application de la fonction de condensat n'est pas modifiée. Au résultat u1 de cette fonction, on ajoute (bloc 40) une quantité aléatoire r pour obtenir un résultat u1". On applique ensuite l'étape suivante de l'algorithme DSA à ce résultat intermédiaire u1". Cela revient à effectuer une étape 34" de calcul de u2" :

$$u2'' = u1 + d*t \bmod q.$$

Pour le calcul de u2", on prendra soin de masquer le produit d*t mod q. Il suffit de partir de la quantité u1".

L'étape suivante de l'algorithme n'est pas modifiée, mais est mise en oeuvre sur la grandeur u2" (bloc 35") :

$$u3'' = [u2''*k^{-1} \bmod q - r*k^{-1} \bmod q] \bmod q.$$

Cette étape 35" fournit le résultat B qui correspond au même résultat que celui obtenu par la mise en oeuvre de l'algorithme DSA classique.

En effet, on peut écrire :

$$u3'' = [(h(M) + r + d*t \bmod q)*k^{-1} \bmod q - r*k^{-1} \bmod q] \bmod q,$$

soit :

$$u3'' = [h(M) + d*t \bmod q]*k^{-1} \bmod q = u3.$$

Comme dans le mode de mise en oeuvre de la figure 6, il est ici nécessaire de mémoriser temporairement la quantité aléatoire r entre les étapes 40 et 35".

Selon le troisième mode de mise en oeuvre illustré par la figure 10, l'étape 33 d'application de la fonction de condensat n'est pas modifiée. A l'étape suivante 34"', on introduit la quantité aléatoire r en l'ajoutant au facteur t. Cela revient à effectuer le calcul suivant :

$$u2''' = u1 + d*(t + r) \bmod q.$$

Puis, selon ce mode de réalisation, on introduit une étape supplémentaire 41 dans laquelle on réutilise la quantité aléatoire r et la donnée secrète. Cette étape consiste à calculer une quantité u5 d'après la relation suivante :

$$u5 = (u2''' - d*r) \bmod q.$$

Puis, on reprend l'algorithme normal en appliquant l'étape 35''' à la quantité u5. Cela revient à calculer :

$$u3''' = u5*k^{-1} \bmod q.$$

Cette étape 35''' fournit le résultat B qui correspond au même résultat que celui obtenu par la mise en oeuvre de l'algorithme DSA classique.

En effet, on peut écrire :

$$u3''' = \{[h(M) + d*(t + r) \bmod q - d*r] \bmod q\}*k^{-1} \bmod q,$$

soit :

$$u3''' = \{[h(M) + d*t \bmod q + d*r \bmod q - d*r] \bmod q\}*k^{-1} \bmod q,$$

ou encore :

$$u3''' = [h(M) + d*t \bmod q]*k^{-1} \bmod q,$$

donc :

$$u3''' = u3.$$

Un avantage de l'invention est que le brouillage au moyen d'une quantité aléatoire n'est pas effectué sur la donnée d'entrée (donc visible) mais sur une donnée intermédiaire du calcul.

Un avantage des modes de réalisation des figures 5 et 8 est que la valeur aléatoire r n'a pas besoin d'être mémorisée. Par conséquent, l'attaque par analyse statistique de la consommation est quasi impossible, le calcul étant brouillé par une valeur aléatoire non connue de l'attaquant. En effet, le fait de faire intervenir une quantité aléatoire différente à chaque traitement rend le piratage quasi-impossible. La quantité r doit pour cela rester secrète et est donc préférentiellement éphémère.

Un autre avantage de l'invention, quel que soit le mode de mise en oeuvre, est que les ressources nécessaires sont négligeables par rapport au reste de mise en oeuvre de l'algorithme. En effet, seules des opérations peu coûteuses en ressources sont introduites (additions, soustractions, multiplications, réductions, etc.) alors que le schéma de la figure 1 requiert une inversion modulaire d'une quantité aléatoire qui est une opération considérablement plus gourmande en termes de ressources.

Bien entendu, la présente invention est susceptible de diverses variantes et modifications qui apparaîtront à l'homme de l'art. En particulier, bien que l'invention ait été décrite dans deux exemples d'application aux algorithmes de type DSA et de type RSA-CRT, celle-ci s'applique plus généralement à tout algorithme mettant en oeuvre des opérations similaires. De plus, le choix d'un des modes de mise en oeuvre de l'invention est à la portée de l'homme du métier en fonction de l'application, par exemple, selon la possibilité qu'il a ou non de prévoir une mémorisation de la quantité aléatoire et le niveau de sécurité souhaité.

**Revendications**

1. Procédé de brouillage d'un calcul mettant en oeuvre au moins une opération dont au moins un résultat intermédiaire (v2, u2) tient compte d'au moins une quantité secrète (d), **caractérisé en ce qu'**il comprend les étapes suivantes :

   modifier ledit résultat intermédiaire avec une quantité aléatoire (r) ;

poursuivre le calcul avec le résultat modifié (v2', v2", v2" ', u2', u2", u2" ') ; et
rétablir un résultat attendu (B) à l'issue du calcul.

2. Procédé selon la revendication 1, **caractérisé en ce que** le résultat intermédiaire correspond au résultat d'une opération simultanée (u2', u2"') ou postérieure (v2', v2", v2" ', u2") à l'opération au cours de laquelle est prise en compte la donnée secrète (d).

3. Procédé selon la revendication 1, **caractérisé en ce que** la quantité aléatoire (r) n'est pas mémorisée.

4. Procédé selon la revendication 1, **caractérisé en ce que** ledit résultat intermédiaire (v2) est de la forme

$$v1*a \bmod p,$$

où p représente un nombre premier, où a représente le résultat d'une opération antérieure faisant intervenir le nombre p, et où v1 représente un nombre fonction de la quantité secrète (d).

5. Procédé selon la revendication 4, **caractérisé en ce qu'**il consiste à ajouter audit résultat intermédiaire (v2) un nombre (r*n, r) proportionnel à ladite quantité aléatoire (r).

6. Procédé selon la revendication 5, **caractérisé en ce que** le facteur (n) du nombre proportionnel à la quantité aléatoire est le modulo du résultat attendu, le rétablissement du résultat attendu (B) s'effectuant par une réduction modulaire sur la base dudit modulo (n).

7. Procédé selon la revendication 5, **caractérisé en ce que** le facteur est unitaire, et **en ce que** le rétablissement du résultat attendu s'effectue en retranchant le produit de la quantité aléatoire (r) par le quotient (q), par le nombre p, du modulo (n) du résultat attendu.

8. Procédé selon la revendication 1, **caractérisé en ce que** ledit résultat intermédiaire (u2) est de la forme :

$$u1 + d*t \bmod q,$$

où q représente un nombre premier, où t représente le résultat d'une première opération antérieure faisant intervenir le nombre q, où u1 représente le résultat d'une deuxième opération antérieure fonction d'une donnée d'entrée (M), et où d représente la quantité secrète.

9. Procédé selon la revendication 8, **caractérisé en ce qu'**il consiste à multiplier le nombre q par la quantité aléatoire (r).

10. Procédé selon la revendication 8, **caractérisé en ce qu'**il consiste à ajouter la quantité aléatoire au résultat u1.

11. Procédé selon la revendication 8, **caractérisé en ce qu'**il consiste à ajouter la quantité aléatoire au résultat t.

A

$$A \longrightarrow A' \qquad 1$$

r

$$\text{MEM (r)} \qquad 4$$

s

$$B' = f(A',s) \qquad 2$$

$$B' \longrightarrow B \qquad 3$$

B

Fig 1

e          M

$$c = d \bmod(p-1)$$
$$f = d \bmod(q-1)$$
$$a = q^{-1} \bmod p \qquad 10$$

d

$$x1 = M^c \bmod p$$
$$x2 = M^f \bmod q \qquad 11$$

$$v1 = (x1-x2)\bmod p \qquad 13$$

$$v2 = v1 * a \bmod p \qquad 14$$

$$v3 = v2 * q \qquad 15$$

$$v4 = v3 + x2 \qquad 16$$

12

B
$$(=v4 = M^d \bmod n)$$

Fig 2

M    p,q    h ( )    α

$$t = (\alpha^k \bmod p) \bmod q$$    30

k ⟶

$$k^{-1} \bmod q$$    31

$$u1 = h(M)$$    33

d ⟶    $$u2 = u1 + d * t \bmod q$$    34    32

$$u3 = u2 * k^{-1} \bmod q$$    35

B = u3

**Fig 3**

d    M

OP ( M, d, r )

r ⟶

B

**Fig 4**

11

$$v1 = (x1-x2) \bmod p$$ ~ 13

$$v2 = v1 * a \bmod p$$ ~ 14

r ——→ $$v2' = v2 + r*n$$ ~ 20

$$v3' = v2' * q$$ ~ 15'

$$v4' = v3' + x2$$ ~ 16'

$$B = v4' \bmod n$$ ~ 21

$$B = M^d \bmod n$$

Fig 5

14

r ——•——→ $$v2'' = v2 + r$$ ~ 22

$$v3'' = v2'' * q$$ ~ 15''

MEM (r)

$$v4'' = v3'' + x2$$ ~ 16''

4

$$B = v4'' - q * r$$ ~ 23

$$B = M^d \bmod n$$

Fig 6

$$11$$

$$v1 = (x1-x2) \bmod p \qquad 13$$

$$v2''' = (v1 * a + r) \bmod p \qquad 14'''$$

$$r$$

$$v3''' = v2''' * q \qquad 15'''$$

$$MEM(r)$$

$$4$$

$$v4''' = v3''' + x2 \qquad 16'''$$

$$v5 = v4''' - q * r \qquad 23'''$$

$$B = v5 \bmod n \qquad 24'''$$

$$B = M^d \bmod n$$

Fig 7

$$31$$

$$u1 = h(M) \qquad 33$$

$$d, r$$

$$u2' = u1 + d * t \bmod(q * r) \qquad 34'$$

$$u3' = u2' * k^{-1} \bmod q \qquad 35'$$

$$B = u3' = u3$$

Fig 8

$$u1 = h(M) \quad \sim 33$$

$$r \longrightarrow$$

$$4 \sim \boxed{MEM\ (r)}$$

$$u1'' = h(M) + r \quad \sim 40$$

$$d \longrightarrow$$

$$u2'' = u1'' + d * t \bmod q \quad \sim 34''$$

$$u3'' = (u2'' * k^{-1} \bmod q \\ - r * k^{-1} \bmod q) \bmod q \quad \sim 35''$$

$$B = u3'' = u3$$

Fig 9

$$u1 = h(M) \quad \sim 33$$

$$d, r \longrightarrow$$

$$4 \sim \boxed{MEM\ (r)}$$

$$u2''' = u1 + d * (t+r) \bmod q \quad \sim 34'''$$

$$u5 = (u2''' - d * r) \bmod q \quad \sim 41$$

$$u3''' = u5 * k^{-1} \bmod q \quad \sim 35'''$$

$$B = u3''' = u3$$

Fig 10

EP 1 291 763 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | WO 01 48706 A (DREXLER HERMANN ;VATER HARALD (DE); GIESECKE & DEVRIENT GMBH (DE)) 5 juillet 2001 (2001-07-05) <br> * page 3, ligne 8 - ligne 18 * <br> * page 5, ligne 26 - page 6, ligne 7 * | 1-11 | G06F7/38 <br> G06F7/72 |
| X | WO 98 52319 A (YEDA RES & DEV ;FLEIT LOIS (US)) 19 novembre 1998 (1998-11-19) <br> * figure 2 * | 1-9 | |
| A | WO 99 35782 A (CRYPTOGRAPHY RESEARCH INC) 15 juillet 1999 (1999-07-15) <br> * page 26, ligne 18 - page 27, ligne 13; figure 2 * <br> * page 22, ligne 6 - ligne 27 * | 1-11 | |
| A | BONG D ET AL: "OPTIMIZED SOFTWARE IMPLEMENTATIONS OF THE MOLULAR EXPONENTIATION ON GENERAL PURPOSE MICROPROCESSORS" COMPUTERS & SECURITY. INTERNATIONAL JOURNAL DEVOTED TO THE STUDY OF TECHNICAL AND FINANCIAL ASPECTS OF COMPUTER SECURITY, ELSEVIER SCIENCE PUBLISHERS. AMSTERDAM, NL, vol. 8, no. 7, 1 novembre 1989 (1989-11-01), pages 621-630, XP000072275 ISSN: 0167-4048 <br> * page 622, colonne de gauche * | 1-11 | DOMAINES TECHNIQUES RECHERCHES (Int.Cl.7) <br> G06F |

Le présent rapport a été établi pour toutes les revendications

| Lieu de la recherche | Date d'achèvement de la recherche | Examinateur |
|---|---|---|
| LA HAYE | 25 novembre 2002 | Verhoof, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**EP 1 291 763 A1**

**ANNEXE AU RAPPORT DE RECHERCHE EUROPEENNE
RELATIF A LA DEMANDE DE BREVET EUROPEEN NO.**

EP 02 35 4134

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

25-11-2002

| Document brevet cité au rapport de recherche | | Date de publication | Membre(s) de la famille de brevet(s) | | Date de publication |
|---|---|---|---|---|---|
| WO 0148706 | A | 05-07-2001 | DE | 19963407 A1 | 12-07-2001 |
| | | | AU | 3015101 A | 09-07-2001 |
| | | | WO | 0148706 A1 | 05-07-2001 |
| WO 9852319 | A | 19-11-1998 | US | 5991415 A | 23-11-1999 |
| | | | AU | 7568598 A | 08-12-1998 |
| | | | EP | 0986873 A1 | 22-03-2000 |
| | | | WO | 9852319 A1 | 19-11-1998 |
| WO 9935782 | A | 15-07-1999 | AU | 2557399 A | 26-07-1999 |
| | | | CA | 2316227 A1 | 15-07-1999 |
| | | | EP | 1050133 A1 | 08-11-2000 |
| | | | US | 2002124178 A1 | 05-09-2002 |
| | | | WO | 9935782 A1 | 15-07-1999 |
| | | | US | 6304658 B1 | 16-10-2001 |
| | | | US | 2001002486 A1 | 31-05-2001 |

EPO FORM P0460